(19) Europäisches Patentamt
European Patent Office
Office européen des brevets

(11) **EP 4 763 870 A1**

(12) **EUROPEAN PATENT APPLICATION**

(43) Date of publication:
24.06.2026 Bulletin 2026/26

(21) Application number: 24220441.0

(22) Date of filing: 17.12.2024

(51) International Patent Classification (IPC):
$C08F\ 2/22$ (2006.01)    $C08F\ 265/06$ (2006.01)
$C08F\ 285/00$ (2006.01)    $C09J\ 7/38$ (2018.01)
$C09J\ 151/00$ (2006.01)

(52) Cooperative Patent Classification (CPC):
(C-Sets available)
**C08F 265/06; C08F 2/22; C08F 2/26; C08F 285/00;**
**C09J 151/003;** C08F 220/1804; C09J 7/385
(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: TESA SE
22848 Norderstedt (DE)

(72) Inventors:
• **ABDELDAIM, Hesham**
**22848 Norderstedt (DE)**
• **WENZEL, Fabian**
**22848 Norderstedt (DE)**
• **SCHMITZ-STAPELA, Daniel**
**22848 Norderstedt (DE)**

(74) Representative: **tesa SE**
**Hugo-Kirchberg-Straße 1**
**22848 Norderstedt (DE)**

(54) **POLYMER PARTICLES AND PRESSURE-SENSITIVE ADHESIVES THEREOF**

(57)    The present invention relates to multiphase polymer particles, pressure-sensitive adhesives based on multiphase polymer particles and the method of preparation.

Figure 1

EP 4 763 870 A1

(52) Cooperative Patent Classification (CPC): (Cont.)

C-Sets
**C08F 265/06, C08F 212/08, C08F 220/06;**
**C08F 265/06, C08F 212/08, C08F 220/1804,**
**C08F 220/06;**
**C08F 285/00, C08F 220/14, C08F 220/1804,**
**C08F 220/06;**
**C08F 285/00, C08F 220/1804, C08F 212/08,**
**C08F 220/06;**
**C08F 285/00, C08F 220/1804, C08F 212/08,**
**C08F 220/06, C08F 220/14;**
**C08F 285/00, C08F 220/1804, C08F 220/14,**
**C08F 220/06, C08F 212/08;**
C08F 220/1804, C08F 212/08, C08F 220/06;
C08F 220/1804, C08F 212/08, C08F 220/06,
C08F 220/40

## Description

## Background

The present invention refers to emulsion-polymerized polymer particles for use as pressure-sensitive adhesives (PSAs).

Especially, the present invention relates to multiphase polymeric particles, the method for producing, preferably in the form of a water-based (waterborne) composition, more preferably dispersion (emulsion or latex), particularly to be used as or in an adhesive, especially a pressure-sensitive adhesive, as well as to the polymeric composition thus produced and to its various uses, usages and applications.

Furthermore, the present invention is also directed to an adhesive, especially a pressure-sensitive adhesive, particularly in the form of a water-based (waterborne) composition, more preferably dispersion (emulsion or latex), comprising the inventive multiphase polymeric particle and/or being obtainable using the inventive polymeric composition as well as to its various uses, usages and applications.

Pressure-sensitive adhesive based on acrylic polymers, which are polymerized in organic solvents, have been widely used due to their superior performance characteristics, such as high peel adhesion, shear force, and stability. However, these solvent-based systems pose significant environmental and health risks due to the presence of volatile organic compounds (VOCs).

Water-based acrylics are recognized for their environmental benefits, as they eliminate the use of harmful solvents. Despite this advantage, typical water-based acrylics suffer from performance deficiencies, particularly in terms of peel adhesion, shear force, and long-term environmental stability.

The utility of aqueous polymeric dispersions (also called aqueous polymeric emulsions) in the preparation of paints, coatings, adhesives and caulks or sealants is well known. Water based or water borne polymer dispersions are often preferred because of their relatively low cost, ease of application and relatively low amounts of volatile organic compounds (VOC) contained therein.

Pressure-sensitive adhesives find use in a wide variety of applications, such as automotive, aerospace, construction and electrical markets, either in the form of tapes or as adhesive coatings on other backings. As the society becomes more aware of the significance of environmental protection, industrial products such as adhesive that is harmful to the ecological environment are gradually being replaced and eliminated.

In the state of the art, emulsion-polymerized polymer particles based on acrylics are typically described as core-shell particles. Multistage polymerized emulsion polymers for use as pressure-sensitive adhesives adhesive are described for example in EP-A 1420055. The disclosure includes a butyl acrylate (BA) and methyl methacrylate (MMA) copolymer obtained by multistage polymerization. BA and MMA are copolymerized in a first stage to give a product to which after 15 minutes (at 90° C) further MMA is added without initiator. MMA diffuses into the copolymer, where it polymerizes (this process also being referred to as Swelling polymerization). The copolymer obtained after Swelling polymerization is tacky.

Further emulsion polymerized polymer particles are described in US 2015 132567 A1 discloses an aqueous dispersion-type pressure-sensitive adhesive composition based on a core-shell particle. The core is based on a (meth) acryl copolymer, which as a glass transition temperature in the range of -55°C and 0°C and the shell is based on a (meth) acryl copolymer, which as a glass transition temperature in the range of 0°C and 180°C

US 2009 0020225 A1 discloses a multistage emulsion polymerized particle wherein the glass transition temperature is increased in every polymerization stage.

EP 3277739 A1 discloses a three-stage emulsion polymerized particle with glass transition temperature with one polymerization stage of a monomer mixture with a glass transition temperature in the range from -10°C to 65°C, a subsequent polymerization stage of a monomer mixture with glass transition temperature of at least 20°C and a third polymerization stage of a monomer mixture with a glass transition temperature in the range from -25°C to 50°C.

There is a need to enhance the performance characteristics of water-based acrylics for use in PSAs, to achieve a balance between environmental sustainability and high adhesive performance. Furthermore, it is crucial to develop PSAs with versatile performance characteristics that can be tailored to meet diverse application requirements. This includes the ability to adjust tack, peel strength, and shear resistance without compromising environmental sustainability. Achieving such versatility in performance would address the technical problem of creating PSAs that can be customized for various industrial and consumer applications while maintaining high adhesive performance and adhering to eco-friendly standards.

This invention addresses this need by developing advanced water-based multiphase acrylic particles that exhibit improved peel adhesion, shear force, and stability, thereby providing a viable alternative to adhesives based on organic solvents.

A first and general aspect of the invention that solves these tasks is an emulsion-polymerized polymer particle for use as pressure-sensitive adhesive, comprising at least three (co)polymers, characterized in that each of the at least three (co)polymers has either a glass transition temperature in the range from -60 °C to -30°C or in the range from 35 °C to 110 °C; at least one of the at least three (co)polymers has a glass transition temperature in the range from -60 °C to -30 °C; and at least one of the at least three (co)polymers has a glass transition temperature in the range from 35 °C to 110 °C.

If not explicitly stated otherwise, the glass transition temperature is determined by dynamic scanning calorimetry (DSC) as described in detailed as Method 1 in the Measurements and test methods.

Embodiments referred to below as preferred are combined, in particularly preferred embodiments, with features of other embodiments referred to as preferred. Especially preferred, therefore, are combinations of two or more of the embodiments referred to below as particularly preferred. Likewise preferred are embodiments in which a feature of one embodiment that is referred to any extent as being preferred is combined with one or more further features of other embodiments which are referred to any extent as being preferred. Features of preferred poly(meth)acrylates and pressure-sensitive adhesives are apparent from the features of preferred methods.

Where, below, both specific amounts or fractions of an element and preferred configurations of the element are disclosed, the specific amounts or fractions of the elements with preferred configuration are also disclosed. Moreover, in the case of the corresponding specific total amounts or total fractions of the elements, it is disclosed that at least some of the elements may have preferred configuration and also, in particular, that elements of preferred configuration may be present again in the specific amounts or fractions within the specific total amounts or total fractions.

**Detailed description**

According to a first aspect of the invention, the present invention refers to a polymer particle by emulsion polymerization for use as pressure-sensitive adhesives, comprising at least three (co)polymers, characterized in that each of the at least three (co)polymers has either a glass transition temperature in the range from -60 °C to -30°C or in the range from 35 °C to 110 °C; at least one of the at least three (co)polymers has a glass transition temperature in the range from -60 °C to -30 °C; and at least one of the at least three (co)polymers has a glass transition temperature in the range from 35 °C to 110 °C.

**Multiphase polymer particle**

Due to the difference in glass transition temperature of the (co)polymers a multiphase particle is formed.

A multiphase polymer particle according to the invention and according to the general understanding is a particle which comprises or consists of at least two phases, i.e., two or more phases. The inner phase of the particle is typically referred to as the seed or the core of the particle. The outer phases are typically referred to the shell of the particle. In accordance with the general understanding, an additional phase, or outer phase, not being the inner phase, of a multiphase particle does not necessarily perform a complete shell, i.e., do not necessarily surround the inner phase or inner phases.

A multiphase particle itself can be referred to as a polymer system which is present in at least two phases. The skilled person understands this to mean that one phase is rich in one component of the particle. For example, the first phase comprises, or consists essentially of a first component (e.g., polymer P(A)), and the other phase is rich in a second component, for example the second phase comprises, or consists essentially of this second component (e.g. polymer P(B). The presence of small amounts of one component in the other, which does not prevent the formation of multiphase, is regarded as irrelevant. In case, the particle according to the invention has more than two phases, the above applies accordingly to all these phases.

The phase separation is particularly preferably realized in such a way that discrete regions ("domains") which are rich in polymer P(A), or polymer P(B) - i.e. are essentially formed from polymer P(A) or polymer P(B) - are present in the particle. A multiphase particle according to the invention is considered to be present in at least two phases if at least one of the following criteria a) - d) is fulfilled:

a) Phase boundaries can be recognized in a height profile evaluation or an evaluation of the Young modulus of an atomic force microscopy image (AFM image);

b) At least two independent glass transition temperatures are obtained from a differential scanning calorimetry (DSC);

c) At least two tan $\delta$ maxima are obtained from a dynamic mechanical analysis (DMA);

d) Characteristic peaks in the scattering profile are obtained from a small angle X-ray scattering (SAXS) measurement;

wherein the above-mentioned measurement(s) are performed on a film created from the multiphase particle.

For clarity and brevity in the following, phases rich in polymer P(A) and polymer P(B) will be referred as P(A) and P(B) phases, respectively. This nomenclature implies that the P(A) phase is essentially composed of polymer P(A), and the P(B) phase is essentially composed of polymer P(B). The presence of small amounts of other components within these phases, which do not hinder the formation of a multiphase system, is considered negligible for the purposes of this discussion.

During the production of a multiphase particle via subsequent polymerization, different copolymers or phases may form through copolymerization at various stages. Multiple copolymers from different stages can combine into one phase through diffusion or further processing. Consequently, phase P(A) can consist of two or more polymers. A multiphase particle, as per the present invention, is defined as a polymer system with at least two phases, even after diffusion of copolymers or further processing such as for example film formation of the multiphase particle.

Independently from each other, each phase the multiphase polymer particle according to the invention preferably comprises or consists of one or more (co-)polymers derived from a monomer composition consisting of at least 80 wt.-% of monomers selected from the group consisting of (meth)acrylates, (meth)acrylamides, and monomers comprising at least one polymerizable vinyl group.

Thus, the monomer composition comprises one or more monomers selected from the group consisting of methacrylic acid esters, methacrylamides and monomers with at least one polymerizable vinyl group to at least 80% by weight, alternatively 85% by weight, more preferably to at least 90% by weight, particularly preferably to at least 95% by weight, especially to at least 98% by weight. Most preferably, the monomer composition comprises exclusively one or more monomers selected from the group consisting of methacrylic acid esters, methacrylamides and monomers having at least one polymerizable vinyl group.

In one embodiment, the emulsion-polymerized polymer particle comprises or consists of (co)polymers derived from

a) 50 - 95 wt.-% (meth)acrylates;
b) 0.1 - 5 wt.-% (meth)acrylic acids;
c) 0 - 5 wt.-% (meth)acryl amides;
d) 0 - 20 wt.-% of vinyl monomers, preferably styrenic monomers;
e) 0 - 20 wt.-% of monomers comprising at least one polymerizable vinyl group, which are different from a) to d).

**Emulsion Polymerization**

The multiphase polymer particle is produced by the process of emulsion polymerization of the recited components. Descriptions of this process may be found for example in "Emulsion Polymerization and Emulsion Polymers" by Peter A. Lovell and Mohamed S. El-Aasser-Wiley-VCH 1997-ISBN 0-471-96746-7 or in EP 1 378 527 B1.

In the polymerization the possibility cannot be excluded that not all monomers are converted into polymers. Here, it is obvious that the residual monomer content should be as low as possible.

Preference is given to providing acrylic pressure-sensitive adhesives comprising the polymer dispersion with a residual monomer content of not more than 1% by weight, especially not more than 0.5% by weight (based on the mass of the base polymer).

In an emulsion polymerization, polymer particles can be produced, which are dispersed in a liquid medium, typically water. A typical emulsion polymerization process begins with the addition of an initiator, often water-soluble, to start the polymerization reaction. Monomer molecules then diffuse into micelles, which are aggregates of surfactant molecules present in the emulsion. Within these micelles, the monomers polymerize, forming polymer chains. As these chains grow, they become insoluble in water and form stable polymer particles, which are usually in the nanometer to micrometer size range. Throughout this process, surfactants play a crucial role in stabilizing the polymer particles, preventing them from coagulating. Emulsion polymerization can generate multi-phase particles with distinct core-shell structures or other complex morphologies.

The emulsion polymerization may also be optionally followed by a drying step to remove moisture. This drying step may also be combined with a further optional crosslinking step which may occur either during or after the drying step. The crosslinking step may involve activation of a crosslinking agent by the drying process. Suitable crosslinkers include dihydrazides, diamines, polyisocyanates, melamineformaldehyde resins, and metal ion salts. The crosslinking step may also comprise the use of ultraviolet (UV) light, increased temperature, or addition of a catalyst.

In the emulsion polymerization, aqueous dispersions of the polymer with solids contents generally of 15 to 75 wt.%, preferably of 40 to 75 wt.%, are obtained. For a high space/time yield of the reactor, dispersions with an extremely high solids content are preferred. In order to be able to achieve solids contents >60 wt.%, a bimodal or polymodal particle size ought to be established, since otherwise the viscosity becomes too high and the dispersion can no longer be managed. Producing a new generation of particles can be accomplished, for example, by adding seed (EP 81083), by adding excess amounts of emulsifier, or by adding mini-emulsions. Another advantage associated with the combination of low viscosity and high solids content is the improved coating characteristics at high solids contents. Producing one or more new generations of particles is something which can be done at any point in time. This time is guided by the particle size distribution that is desired for a low viscosity.

**Monomers for hard and soft phases**

In one embodiment of the invention, the emulsion-polymerized polymer particle comprises at least one phase P(A) with a glass transition temperature of less than -10 °C, preferably less than -20 °C, even more preferably less than -30 °C; and at least one phase P(B) with a glass transition temperature of more than 10 °C, preferably more than 20 °C, even more preferably more than 30 °C, wherein the glass transition temperature is determined via DSC (method 1). The phase or phases P(A) at each occurrence independently from each other represent homo- or copolymers, which can be derived from monomers A, wherein the monomers A comprise one or more monomers selected from the group consisting of (meth) acrylic acid esters, (meth)acrylamides and monomers having at least one polymerizable vinyl group. The phase or phases P(B) at each occurrence independently from each other represent homo- or copolymers, which can be derived from monomers B, wherein the monomers B comprise one or more monomers selected from the group consisting of (meth) acrylic acid esters, (meth)acrylamides and monomers having at least one polymerizable vinyl group. If not stated otherwise, the glass transition temperature is determined by dynamic scanning calorimetry according to method 1 as described in the section Measurement and test methods.

In a preferred embodiment, the emulsion-polymerized polymer particle comprises at least one phase P(A) with a glass transition temperature in the range from -60 °C to -30 °C and at least one phase P(B) with a glass transition temperature in the range from 35 °C to 110 °C, wherein the glass transition temperature is determined via DSC (method 1).

Monomers A

The monomers A comprise one or more monomers selected from the group consisting of (meth)acrylic acid esters, (meth)acrylamides and monomers with at least one polymerizable vinyl group to at least 80% by weight, alternatively 85% by weight, more preferably to at least 90% by weight, particularly preferably to at least 95% by weight, especially to at least 98% by weight. Most preferably, the monomers A comprise exclusively one or more monomers selected from the group consisting of (meth)acrylic acid esters, (meth)acrylamides and monomers having at least one polymerizable vinyl group.

In one embodiment, the multiphase particle comprises at least one phase P(A) with a glass transition temperature $T_g$ ranging from -100 °C to -10 °C, especially from -60 °C to -30 °C, which is determined by dynamic scanning calorimetry according to method 1 as described in the section Measurement and test methods.

According to a particular embodiment, it is preferred when the monomers A of P(A), which has a glass transition temperature $T_g$ ranging from -100 °C to -10 °C, especially from -60 °C to -30 °C, are selected from the group consisting of:

(1) linear, branched or cycloaliphatic $C_1$-$C_{22}$-alkyl(meth)acrylates, especially methyl(meth)acrylate, ethyl(meth) acrylate, n-butyl(meth)acrylate, iso-butyl-(meth)acrylate, lauryl(meth)acrylate, 2-ethylhexyl(meth)acrylate, stearyl-(meth)acrylate, cyclohexyl(meth)acrylate, isobornyl(meth)acrylate, 2-octyl-(meth)acrylate and tert-butyl(meth) acrylate;

(2) linear, branched or cycloaliphatic $C_1$-$C_{22}$-alkylacrylic acids, especially methylacrylic acid, ethylacrylic acid, n-butylacrylic acid, isobutylacrylic acid, laurylacrylic acid, 2-ethylhexylacrylic acid, stearylacrylic acid, cyclohexyl-acrylic acid, isobornylacrylic acid and tert-butylacrylic acid;

(3) aryl(meth)acrylates, especially benzyl(meth)acrylate and phenyl(meth)- acrylate, especially wherein the aryl radicals are each unsubstituted or substituted with up to four substituents;

(4) arylacrylic acids, especially benzylacrylic acid and phenylacrylic acid, especially wherein the aryl radicals may be each unsubstituted or substituted with up to four substituents;

(5) mono(meth)acrylates of ethers, polyethyleneglycols, polypropyleneglycols or mixed polyethylene/propylene glycols each comprising 5 to 80 carbon atoms, especially tetrahydrofurfuryl(meth)acrylate, methoxyethoxyethyl(meth)- acrylate, 1-butoxypropyl(meth)acrylate, cyclohexyloxymethyl(meth)acrylate, methoxymethoxyethyl(meth)acrylate, benzyloxymethyl(meth)acrylate, furfuryl-(meth)acrylate, 2-butoxyethyl(meth)acrylate, 2-ethoxyethyl(meth)acrylate, allyloxymethyl(meth)acrylate, 1-ethoxybutyl(meth)acrylate, 1-ethoxyethyl-(meth)acrylate, ethoxymethyl(meth)acrylate, poly(ethyleneglycol)methyl-ether(meth)acrylate and poly(propyleneglycol)methylether(meth)acrylate;

(6) aminoalkyl(meth)acrylates, especially N,N-dimethylaminoethyl(meth)acrylate, 2-trimethylammoniumethyl(meth) acrylatchloride and N,N-dimethylaminopropyl(meth)acrylate;

(7) oxiranyl(meth)acrylates, especially 2,3-epoxybutyl(meth)acrylate, 3,4-epoxy-butyl(meth)acrylate and glycidyl(meth)acrylate;

(8) styrenes and substituted styrenes, especially a-methylstyrenes, 4-methyl- styrenes, 4-vinylbenzoic acid and sodium-4-vinylbenzene sulfonate;

(9) (meth)acrylonitriles;

(10) ethylenically unsaturated sulfonic acids and sulfates and salts thereof, especially potassium[3-((meth)acryloyloxy)propyl]sulfonate and ammonium[2-((meth)acryloyloxy)ethyl]su lfate;

(11) vinylesters of carboxylic acids comprising 1 to 20 carbon atoms, especially vinylacetate;

(12) vinylesters of versatic acids;

(13) (meth)acrylamides;

(14) N-alkyl- and N,N-dialkyl-substituted (meth)acrylamides comprising linear, branched or cycloaliphatic $C_1$-$C_{22}$-alkyl groups, especially N-(tert-butyl)- acrylamide and N,N-dimethylacrylamide;

(15) heterocyclic (meth)acrylates, especially piperonyl(meth)acrylate.

According to yet another particular embodiment, it is preferred when the monomers A of P(A), which has a glass transition temperature Tg ranging from -100 °C to -10 °C, especially from -60 °C to -30 °C, are selected from the group consisting of:

(1) linear, branched or cycloaliphatic $C_1$-$C_{22}$-alkylacrylates, especially ethyl- acrylate, n-butylacrylate, iso-butylacrylate, laurylacrylate, laurylmethacrylate, 2-ethylhexylacrylate, 2-ethylhexylmethacrylate, stearylacrylate, stearylmeth-acrylate, 2-octylmethacrylate and 2-octylacrylate;

(2) linear, branched or cycloaliphatic Ci-C22-alkylacrylic acids, especially ethylacrylic acid, n-butylacrylic acid, isobutylacrylic acid, laurylacrylic acid, 2-ethylhexylacrylic acid, stearylacrylic acid, cyclohexylacrylic acid, isobornylacrylic acid and tert-butylacrylic acid;

(3) arylacrylates, especially wherein the aryl radicals are each unsubstituted or substituted with up to four substituents;

(4) arylacrylic acids, especially benzylacrylic acid and phenylacrylic acid, especially wherein the aryl radicals may be each unsubstituted or substituted with up to four substituents;

(5) monoacrylates of ethers, polyethyleneglycols, polypropyleneglycols or mixed polyethylene/propylene glycols each comprising 5 to 80 carbon atoms, especially tetrahydrofurfurylmethacrylate, tetrahydrofurfurylacrylate, methoxy- ethoxyethylmethacrylate, methoxyethoxyethylacrylate, 1-butoxypropylmeth- acrylate, 1-butoxypropylacrylate, cyclohexyloxymethylmethacrylate, cyclo-hexyloxymethylacrylate, methoxymethoxyethylmethacrylate, methoxymethoxyethylacrylate, benzyloxymethylmethacrylate, benzyloxymethyl- acrylate, furfurylmethacrylate, furfurylacrylate, 2-butoxyethylmethacrylate, 2-butoxyethylacrylate, 2-ethoxyethylmethacrylate, 2-ethoxyethylacrylate, allyl-oxymethyl methacrylate, allyloxymethylacrylate, 1-ethoxybutylmethacrylate, 1-ethoxybutylacrylate, 1-ethoxyethylmethacrylate, 1-ethoxyethylacrylate, ethoxymethylmethacrylate, ethoxymethylacrylate, poly(ethyleneglycol)methylethermethacrylate poly(ethyleneglycol)methyletheracrylate, polypropylene- glycol)methylethermethacrylate and poly(propyleneglycol)methylether-acrylate;

(6) aminoalkylacrylates, especially N,N-dimethylaminoethylacrylate, 2-trimethyl-ammoniumethylacrylatchloride and N,N-dimethylaminopropylacrylate;

(7) oxiranylacrylates, especially 2,3-epoxybutylacrylate, 3,4-epoxybutylacrylate and glycidylacrylate;

(8) styrenes and substituted styrenes;

(9) ethylenically unsaturated sulfonic acids and sulfates and salts thereof, especially potassium[3-(acryloyloxy) propyl]sulfonate and ammonium- [2-(acryloyloxy)ethyl]sulfate;

(10) vinylesters of carboxylic acids comprising 1 to 20 carbon atoms;

(11) N-alkyl- and N,N-dialkyl-substituted acrylamides comprising linear, branched or cycloaliphatic $C_1$-$C_{22}$-alkyl groups;

(12) heterocyclic acrylates, especially piperonylacrylate.

In one embodiment, the monomers A according to the invention comprise a total of at least 50% by weight, based on the total weight of the monomers A, of one or more acrylate monomers A1 ("monomers A1"), each of which has a glass transition temperature of the homopolymer concerned which is less than or equal to 0°C. The glass transition temperature is determined according to method 1 as described in the section on measurement and test methods.

In one embodiment, the monomers A1 have a glass transition temperature of the homopolymer in question of less than or equal to ($\leq$) -10 °C, in particular less than or equal to ($\leq$) -20 °C, wherein the glass transition temperature is determined according to method 1 as described in the section on measurement and test methods.

Monomers with a glass transition temperature of the homopolymer in question of $\leq$ 0 °C, more preferably of $\leq$ -10 °C, in particular of $\leq$ -20 °C, i.e. monomers that are particularly suitable for the polymer block P(A), are selected, for example, from the group consisting of ethyl acrylate, n-butyl acrylate, iso-butyl acrylate, iso-amyl acrylate, n-hexyl acrylate, 2-heptyl acrylate n-heptyl acrylate, 2-ethylhexyl acrylate, 2-octyl acrylate, n-octyl acrylate, iso-octyl acrylate, n-nonylacrylate, iso-nonylacrylate, 2-propylheptyl acrylate, n-decyl acrylate, iso-decyl acrylate, lauryl acrylate, 2-[[(butylamino)carbonyl]oxy]ethyl acrylate, 2-cyanoethyl acrylate, 2-(2-ethoxyethoxy)ethyl acrylate, phenoxyethyl acrylate, iso-stearyl acrylate, docosyl acrylate, and 2-[2-(2-methoxyethoxy)-ethoxy]ethyl acrylate.

In a preferred embodiment, the one or more acrylate monomers A1 is selected from the general structure $CH_2$=C(H)(COOR$^1$); wherein R$^1$ at each occurrence is independently selected from a linear or branched alkyl radical having from 4 to 17 carbon atoms.

In further embodiments, the monomers A according to the invention comprise a total of at least 75% by weight, at least 85% by weight, at least 90% by weight, at least 95% by weight, at least 98% by weight, or 100% by weight, based on the total weight of the monomers A, of one or more monomers A1.

In a preferred embodiment, the monomers A1 are selected from the group consisting of n-butyl acrylate, iso-butyl acrylate, iso-amyl acrylate, n-hexyl acrylate, n-heptyl acrylate, 2-heptyl acrylate, 2-ethylhexyl acrylate, 2-octyl acrylate, n-octyl acrylate, iso-octyl acrylate, n-nonylacrylate, iso-nonylacrylate, 2-propyl heptyl acrylate, n-decyl acrylate, iso-decyl acrylate, lauryl acrylate, tetradecyl acrylates, heptadecyl acrylate.

The phase or phases P(B) at each occurrence independently from each other represent homo- or copolymers, which can be derived from monomers B, wherein the monomers B comprise one or more monomers selected from the group consisting of (meth)acrylic acid esters, (meth)acrylamides and monomers having at least one polymerizable vinyl group.

Monomers B

The monomers B comprise one or more monomers selected from the group consisting of (meth)acrylic acid esters, (meth)acrylamides and monomers with at least one polymerizable vinyl group to at least 80% by weight, alternatively 85% by weight, more preferably to at least 90% by weight, particularly preferably to at least 95% by weight, especially to at least 98% by weight. Most preferably, the monomers B comprise exclusively one or more monomers selected from the group consisting of (meth)acrylic acid esters, (meth)acrylamides and monomers having at least one polymerizable vinyl group.

In one embodiment, the multiphase particle comprises at least one phase P(B) with a glass transition temperature Tg ranging from 30 °C to 200 °C, especially from 35 °C to 110 °C, which is determined by dynamic scanning calorimetry according to method 1 as described in the section Measurement and test methods.

According to a particular embodiment, it is preferred when the monomers B of P(B), which has a glass transition temperature Tg ranging from 30 °C to 200 °C, especially from 35 °C to 110 °C are selected from the group consisting of:

(1) linear, branched or cycloaliphatic $C_1$-$C_{22}$-alkyl(meth)acrylates, especially methyl(meth)acrylate, ethyl(meth) acrylate, n-butyl(meth)acrylate, isobutyl- (meth)acrylate, lauryl(meth)acrylate, 2-ethylhexyl(meth)acrylate, stearyl-(meth)acrylate, cyclohexyl(meth)acrylate, isobornyl(meth)acrylate, 2-octyl-(meth)acrylate and tert-butyl(meth)acrylate;

(2) acrylic acid and linear, branched or cycloaliphatic $C_1$-$C_{22}$-alkylacrylic acids, especially methacrylic acid, ethylacrylic acid, n-butylacrylic acid, iso-butylacrylic acid, laurylacrylic acid, 2-ethylhexylacrylic acid, stearylacrylic acid, cyclohexylacrylic acid, isobornylacrylic acid and tert-butylacrylic acid;

(3) aryl(meth)acrylates, especially benzyl(meth)acrylate and phenyl(meth)- acrylate, especially wherein the aryl radicals may be each unsubstituted or substituted with up to four substituents;

(4) arylacrylic acids, especially benzylacrylic acid and phenylacrylic acid, especially wherein the aryl radicals may be each unsubstituted or substituted with up to four substituents;

(5) mono(meth)acrylates of ethers, polyethyleneglycols, polypropyleneglycols or mixed polyethylene/propylene glycols each comprising 5 to 80 carbon atoms, especially tetrahydrofurfuryl(meth)acrylate, methoxyethoxyethyl(meth)-acrylate, 1-butoxypropyl(meth)acrylate, cyclohexyloxymethyl(meth)acrylate, methoxymethoxyethyl(meth)acrylate, benzyloxymethyl(meth)acrylate, furfuryl- (meth)acrylate, 2-butoxyethyl(meth)acrylate, 2-ethoxyethyl(meth)acrylate, allyloxymethyl(meth)acrylate, 1-ethoxybutyl(meth)acrylate, 1 -ethoxyethyl-(meth)acrylate, ethoxymethyl(meth)acrylate, poly(ethyleneglycol)methyl-ether(meth)acrylate and poly(propyleneglycol)methylether(meth)acrylate;

(6) aminoalkyl(meth)acrylates, especially N,N-dimethylaminoethyl(meth)acrylate, 2-trimethylammoniumethyl(meth) acrylatchloride and N,N-dimethylaminopropyl(meth)acrylate;

(7) oxiranyl(meth)acrylates, especially 2,3-epoxybutyl(meth)acrylate, 3,4-epoxy-butyl(meth)acrylate and glycidyl(meth)acrylate;

(8) styrenes and substituted styrenes, especially a-methylstyrenes, 4-methylstyrenes, 4-vinylbenzoic acid and sodium-4-vinylbenzene sulfonate;

(9) (meth)acrylonitriles;

(10) ethylenically unsaturated sulfonic acids and sulfates and salts thereof, especially potassium[3-((meth)acryloyloxy)propyl]sulfonate and ammonium[2-((meth)acryloyloxy)ethyl]sulfate;

(11) vinylesters of carboxylic acids comprising 1 to 20 carbon atoms, especially vinylacetate;

(12) vinylesters of versatic acids;

(13) (meth)acrylamides;

(14) N-alkyl- and N,N-dialkyl-substituted (meth)acrylamides comprising linear, branched or cycloaliphatic $C_1$-$C_{22}$-alkyl groups, especially N-(tert-butyl)- acrylamide and N,N-dimethylacrylamide;

(15) heterocyclic (meth)acrylates, especially piperonyl(meth)acrylate.

According to yet another particular embodiment of the inventive method, it is preferred when the monomers B of P(B), which has a glass transition temperature Tg(I) ranging from 30 °C to 200 °C, especially from 40 °C to 150 °C, are selected from the group consisting of:

(1) linear, branched or cycloaliphatic $C_1$-$C_{22}$-alkylmethacrylates, especially methylmethacrylate, ethylmethacrylate, iso-butylmethacrylate, cyclohexyl- methacrylate, isobornylmethacrylate, isobornylacrylate, tert-butylacrylate and tert-butylmethacrylate;

(2) acrylic acid and linear, branched or cycloaliphatic $C_1$-$C_{22}$-alkylacrylic acids;

(3) arylmethacrylates, especially benzylmethacrylate, phenylacrylate and phenylmethacrylate, especially wherein the aryl radicals are each unsubstituted or substituted with up to four substituents;

(4) arylacrylic acids, especially wherein the aryl radicals may be each unsubstituted or substituted with up to four substituents;

(6) aminoalkylmethacrylates, especially N,N-dimethylaminoethylmethacrylate, 2-trimethylammoniumethylmethacrylate chloride and N,N-dimethylamino- propylmethacrylate;

(7) oxiranylmethacrylates, especially 2,3-epoxybutylmethacrylate, 3,4-epoxybutylmethacrylate and glycidylmethacrylate;

(8) styrenes and substituted styrenes, especially a-methylstyrenes, 4-methylstyrenes, 4-vinylbenzoic acid and sodium-4-vinylbenzene sulfonate;

(9) acrylonitrile and methacrylonitrile;

(10) ethylenically unsaturated sulfonic acids and sulfates and salts thereof, especially potassium[3-(methacryloyloxy) propyl]sulfonate and ammonium[2-(methacryloyloxy)ethyl]sulfate;

(11) vinylesters of carboxylic acids comprising 1 to 20 carbon atoms, especially vinylacetate;

(12) vinylesters of versatic acids;

(13) acrylamide and methacrylamide;

(14) N-alkyl- and N,N-dialkyl-substituted methacrylamides comprising linear, branched or cycloaliphatic $C_1$-$C_{22}$-alkyl groups, especially N-(tert-butyl)- acrylamide and N,N-dimethylacrylamide;

(15) heterocyclic methacrylates, especially piperonyl methacrylate.

According to yet a further particular embodiment of the inventive method, it is preferred when at least one P(B), which has a glass transition temperature Tg ranging from 30 °C to 200 °C, especially from 40 °C to 150 °C, comprises methyl methacrylate (MMA) and/or acrylic acid (AA), preferably methyl methacrylate (MMA) and acrylic acid (AA).

In one embodiment, the monomers B according to the invention comprise a total of at least 60% by weight, based on the total weight of the monomers B, of one or more (meth)acrylate monomers and/or (meth)acrylamide monomers B1 ("monomers B1"), each of which has a glass transition temperature of the homopolymer concerned which is greater than or equal to 90°C. The glass transition temperature is determined according to method 1 as described in the section on measurement and test methods.

In one embodiment, the monomers B1 have a glass transition temperature of the homopolymer concerned which is greater than or equal to 90°C, preferably greater than or equal to 95°C, most preferably greater than or equal to 100°C.

The monomers B comprise one or more monomers selected from the group consisting of methacrylic acid esters, methacrylamides and monomers with at least one polymerizable vinyl group to at least 80% by weight, alternatively 85% by weight, more preferably to at least 90% by weight, particularly preferably to at least 95% by weight, especially to at least 98% by weight. Most preferably, the monomers B comprise exclusively one or more monomers selected from the group consisting of methacrylic acid esters, methacrylamides and monomers having at least one polymerizable vinyl group.

The monomers B according to the invention comprise a total of at least 60% by weight, based on the total weight of the monomers B, of one or more (meth)acrylate monomers and/or (meth)acrylamide monomers B1 ("monomers B1"), each of which has a glass transition temperature of the homopolymer concerned which is greater than or equal to 90°C. The glass transition temperature is determined according to method 1 as described in the section on measurement and test methods.

In one embodiment, the monomers B1 have a monomer with a glass transition temperature of the homopolymer in question of $\geq$ 50 °C, more preferably of $\geq$ 75 °C, in particular of $\geq$ 100 °C, i.e. monomers which are particularly suitable for the polymer block P(B) are, for example, selected from the group consisting of dicyclopentanyl acrylate, isobornyl acrylate, norbornyl acrylate, benzyl acrylate, 3,3,5-trimethylcyclohexyl acrylate, cyclohexyl acrylate, 3,3,5-trimethylcyclohexyl acrylate, 3,3,5-trimethylcyclohexyl acrylate and 3,3,5-trimethylcyclohexyl acrylate, cyclohexyl acrylate, 4-[(6-acryloyloxy) hexyloxy]4'-cyanobiphenyl, N-succinimidyl acrylate, 1-ethylcyclopentyl acrylate, N-tert-octyl acrylamide, N-tert-butyl acrylamide, dimethylacrylamide, diethyl acrylamide, acrylamide, N-[3-(dimethylamino)propyl]acrylamide, diacetone acrylamide, N-(butoxymethyl)acrylamide, N-phenylacrylamide, N-[2-(dimethylamino)ethyl]acrylamide, N-[2-(diethylamino)ethyl]acrylamide, methyl methacrylate, ethyl methacrylate, cyclohexyl methacrylate, benzyl methacrylate, isobornyl methacrylate, glycerol formal methacrylate, 2-dimethylaminoethyl methacrylate, phenoxyethyl methacrylate, 9-anthryl methyl methacrylate, 2-ethyl-2-adamantyl methacrylate, 2-(acetoacetyloxy)ethyl methacrylate, 2-isopropyl-2-methacryloyloxyadamantane, iso-propyl methacrylate, iso-butyl methacrylate, tert-butyl methacrylate, furfuryl methacrylate, 2-methacryloyloxy-2-methyladamantane, phenyl methacrylate, N-succinimidyl methacrylate, 2-(tert-butylamino)ethyl methacrylate, 2-cyclohexylpropane-2-yl methacrylate, 1-adamantyl methacrylate, 1-methylcyclopentyl methacrylate, 3-dimethylaminopropyl methacrylamide, N-tert-butyl methacrylamide, N-(methoxymethyl)methacrylamide, N,N-dimethylmethacrylamide, methacrylamide, N-phenylmethacrylamide, N,N-dimethylmethacrylamide, N-vinylformamide, N-vinylpyrrolidone, N-vinylcaprolactam, N-vinylcarbazole, N-vinylimidazole, vinylmethyloxazolidinone and N-vinyl-N-methylacetamide.

Further examples of monomers with a glass transition temperature greater than or equal to 50°C as monomers B1 are acrylic acid, 2-hydroxyethyl methacrylate, isobornyl acrylate, isobornyl methacrylate, benzyl methacrylate, cyclohexyl methacrylate, ethyl methacrylate, iso-butyl methacrylate, methyl methacrylate, phenoxyethyl methacrylate, tert-butyl cyclohexyl methacrylate, tert-butyl methacrylate, ureido methacrylate, $\alpha$-methyl styrene and styrene.

In one embodiment, the monomers B1 have a glass transition temperature of their corresponding homopolymer, which is greater than or equal to 90°C, preferably greater than or equal to 95°C, most preferably greater than or equal to 100°C.

In a preferred embodiment, the emulsion-polymerized polymer particle comprises at least two (co)polymers having a glass transition temperature in the range from -60 °C to -30 °C.

In a preferred embodiment, the emulsion-polymerized polymer particle comprises at least two (co)polymers having a glass transition temperature in the range from 35 °C to 110 °C.

In one embodiment, the emulsion-polymerized polymer particle comprises at least two (co)polymers having a glass transition temperature in the range from -60 °C to -30 °C and at least one (co)polymer having a glass transition temperature in the range from 35 °C to 110 °C.

In one embodiment, the emulsion-polymerized polymer particle comprises at least one (co)polymer having a glass transition temperature in the range from -60 °C to -30 °C and at least two (co)polymers having a glass transition temperature in the range from 35 °C to 110 °C.

In one embodiment, the emulsion-polymerized polymer particle comprises at least two (co)polymers having a glass transition temperature in the range from -60 °C to -30 °C and at least two (co)polymers having a glass transition temperature in the range from 35 °C to 110 °C.

In a preferred embodiment, the emulsion-polymerized polymer particle comprises at least one (co)polymer having a glass transition temperature of more than 65°C, preferably more than 70°C.

In a further development of this embodiment, the emulsion-polymerized polymer particle comprises at least one (co)polymer having a glass transition temperature in the range from -60 °C to -30 °C, and least one (co)polymer having a glass transition temperature in the range from 35 °C to 65 °C, and least one (co)polymer having a glass transition temperature in the range from 65 °C to 110 °C.

In an additional further development of this embodiment, the emulsion-polymerized polymer particle comprises at least two (co)polymers having a glass transition temperature in the range from -60 °C to -30 °C, and least one (co)polymers having a glass transition temperature in the range from 35 °C to 65 °C, and least one (co)polymer having a glass transition temperature in the range from 65 °C to 110 °C.

In one embodiment, the emulsion-polymerized polymer particle has a ratio by weight-% of (co)polymers with a glass transition temperature in the range from 35 °C to 110 °C to (co)polymers with a glass transition temperature in the range from -60 °C to -30 °C is equal or smaller than 25%, preferably equal or smaller than 20%.

In general, during the processing of polymer particles, (co)polymers with high and low glass transition temperatures can respectively combine in the corresponding phases. In a preferred embodiment, the soft phase (low glass transition temperature) forms the continuous phase in the pressure-sensitive adhesive, while the hard phase (high glass transition temperature) forms islands within the continuous phase. This structure allows for improved adhesion and flexibility of the adhesive, with the islands of the hard phase providing additional mechanical stability.

**Sequential Polymerization**

One aspect of the present invention relates to a hybrid latex containing polymer particles that are polymerized in a sequential polymerization comprising at least three stages. The polymerized (co)polymers can form two distinct phases. The first phase is typically a bulk or core polymer, which preferably is an all acrylic core, optionally cross-linked, during polymerization. The second phase is a surface or shell polymer, which preferably is a vinyl-acrylic copolymer with a cross-linkable moiety polymerized thereon. The cross-linkable moieties cross-link with other latex particles in ambient conditions preferable with a crosslinking agent in water.

A conventional acrylic latex polymerization typically involves a single charge of emulsified monomer or a monomer mix that is introduced, initiated, and polymerized to form polymer particles. However, a two-stage sequential latex polymerization according to the invention can involve the following: a first introduction, initiation, and polymerization of a first charge of monomer to form the first phase; and, thereafter, introduction of a second charge of monomer or monomer emulsion and co-polymerization of that second charge of monomers with the first phase to form a second phase. Multi-stage sequential latex polymerizations according to the invention advantageously allow for the second phase to be introduced within 0 min to 240 min, preferably between 60 and 120 min, more preferably 90 min, of the completion of the first core phase.

A multistage sequential latex polymerization according to the invention can occur in the following manner. First, an initial kettle charge containing water, optionally but preferably a surfactant, and optionally a buffer like sodium bicarbonate, is placed in a reaction vessel (i.e. reactor) and brought to a polymerization temperature with nitrogen purge. The polymerization temperature can be tailored to the particular initiators/monomers in the polymerization. For example, when sodium persulfate is used as the initiator for acrylic monomers, the polymerization temperature can be between about 70° C. and about 90° C., preferably between about 75° C. and about 85° C., and more specifically about 80° C. When the initial kettle charge and the reaction vessel are at temperature, a seed amount of a first emulsion containing water, a surfactant, a first mixture of monomers, additional additives, and optionally a pH adjustor can then be added. A first initiator solution containing water and persulfate initiator can thereafter be added to the emulsion. A seed amount of monomer, in combination with the initiator solution, should be sufficient to allow the polymerization to begin. In one embodiment, the seed amount can represent about 1% to about 10%, for example from about 3% to about 6%, of the weight of the first emulsion. The proportion of monomers added in this first emulsion can ideally represent a share of the desired composition of the first phase.

Typically, a short period of time such as about 15 minutes is allowed for the initiator solution and the monomer emulsion to reach the polymerization temperature and for the polymerization to begin. Thereafter, the remainder of the first emulsion can be added to the reaction vessel, either continuously or in multiple sequential charges, along with a second initiator solution containing water and sodium persulfate. The first emulsion can advantageously contain at least about 10 wt. %, preferably at least about 25 wt. %, more preferably at least about 40 wt. % or at least about 50% of the total monomer content. The first emulsion can also advantageously contain no more than about 90 wt. %, preferably no more than about 80 wt. %, more preferably no more than about 70 wt. % of the total monomer content.

When all of the first emulsion has been added, a second emulsion is simultaneously added with the second initiator solution. The second emulsion contains water, a surfactant, a second mixture of monomers, additional additives, and optionally a pH adjustor. The rates of addition of the first and second emulsions and the second initiator solution containing water and sodium persulfate can advantageously be tailored to be appropriate to the reaction conditions and the nature of the reactants in the polymerization. Nevertheless, the rate of addition of the second initiator solution should typically be such that the second initiator solution is co-added during both the addition of the remainder of the first emulsion and the addition of the second emulsion.

The same holds true for subsequent emulsion polymerizations of the multistage polymerization.

In one embodiment, the sequential addition of the monomer emulsions can occur for a period of about 2 to about 5 hours, preferably from about 3 to about 4 hours, for example about 3.5 hours. After the additions of monomer and initiator have ended, a sufficient polymerization time is allowed. This polymerization time can be, in one embodiment, from about ½ hour to about 2 hours, for example about 1 hour.

The inventive latex is sequentially polymerized in at least three stages so as to form at least two distinct phases: the first phase may be a core and the second phase may be a shell, whereby the core is the result of the first phase of the sequential emulsion polymerization, and the shell is the result of the second phase of the sequential emulsion polymerization. The relative positions of the first and second phases of the polymer particles can be internal and external, e.g., core and shell, as well as neighboring, e.g., side-by-side, dependent on how the first and second phases of the polymerization are performed. Preferably, the relative positions of the first and the second phases of the polymer particles are internal and external. As used herein, the terms core and shell also include the side-by-side configuration.

After the polymerization has run its course, optionally but preferably, a two part chaser system can be co-added to the reaction vessel. The first part of the chaser system is a solution containing water, a redox initiator system comprising an oxidizing agent (e.g. tert-butyl hydroperoxide), and optionally a surfactant. The second part is comprised of water, a reducing agent (e.g. a sodium salt of an organic sulfinic acid derivative), and optionally a surfactant. The primary purpose of the chaser solution, when present, is to react with, and thus devolatilize, any residual monomers and/or low molecular weight oligomers from the polymerization. Following the optional addition of the chaser solution, a stabilizing solution containing water and a pH adjustor, as well as a biocide/preservative can optionally be added to the reaction vessel to help stabilize the latex emulsion.

The core may be polymerized with crosslinking monomers, e.g., 1,4-butanediol diacrylate, in the pre-emulsion composition. Alternatively, crosslinkable monomers such as diacetone acrylamide (DAAM) are present and are co-polymerized in the first stage pre-emulsion composition. The crosslinking monomers cross-link the core during the polymerization process. On the other hand, the crosslinkable monomers remain un-crosslinked while in the aqueous phase and become cross-linked after being applied to a surface and the water evaporates. The crosslinked monomer of the core polymer imparts improved hardness and weathering property to the resulting latex. The shell should have the crosslinkable monomers co-polymerized thereon. After being applied on to a substrate, the crosslinkable monomers in the shell crosslink to other latex particles to form a film. The core may also have cross-linkable monomers polymerized thereon.

In one embodiment, the sequential polymerization comprises at least three stages for polymerizing the at least three (co)polymers, wherein the sequential polymerization comprises at least three polymerization stages for polymerizing a (co)polymer with a glass transition temperature in the glass transition temperature range a) in the range from -60 °C to -30°C or in b) in the range from 35 °C to 110 °C; wherein starting from the second stage, the glass transition temperature of the (co)polymer, polymerized in each stage differs in the glass transition temperature range from the (co)polymer, polymerized in the previous stage.

For example, starting the sequential polymerization with the polymerization of the seed (co)polymer with a glass transition temperature range in the range from -60 °C to -30°C (range a), the (co)polymer polymerized in the second stage has a glass transition temperature in the glass transition temperature range b (i.e., in the range from 35 °C to 110 °C), and the (co)polymer polymerized in the third stage has glass transition temperature in the glass transition temperature range a again. Thus, the glass transition temperature ranges are alternating to result in polymerization sequence of "a - b - a"; or "b - a - b"; or "a - b - a - b"; or "b - a - b - a". In a preferred embodiment, the polymerization sequence is "a - b - a - b".

In a preferred embodiment, the emulsion-polymerized polymer particle comprises a seed with a glass transition temperature in the range from -60 °C to -30 °C.

In one aspect, the invention relates to a method for preparing an emulsion-polymerized polymer particle comprising the steps

a) Dispersing 10 to 30 wt.-% of a first monomer mixture, a surfactant, and an initiator in an aqueous medium;
b) polymerizing the first monomer mixture;
c) Dispersing 3 to 10 wt.-% of a second monomer mixture, wherein the glass transition temperature of the second monomer mixture differs in at least 65°C compared to the glass transition temperature of the first monomer mixture;
d) polymerizing the second monomer mixture;
e) Dispersing 50 to 80 wt.-% a third monomer mixture, wherein the glass transition temperature of the third monomer mixture differs in at least 65°C compared to the second monomer mixture;
f) polymerizing the third monomer mixture; optionally
g) dispersing 3 to 15 wt.-% of a fourth monomer mixture, wherein the glass transition temperature of the fourth monomer mixture differs in at least 65°C compared to the third monomer mixture; and optionally polymerizing the fourth monomer mixture.

In a preferred embodiment, each polymerization step, i.e., steps b), d), f), and the optional step g) a (co)polymer is polymerized with a glass transition temperature either in the range from -60 °C to -30°C or in the range from 35 °C to 110 °C.

The glass transition temperature of the (co)polymers and/or monomer mixtures may advantageously be selected, through choice and quantitative composition of the components employed, such that in analogy to the Fox equation, as per equation E1

$$\frac{1}{T_G} = \sum_n \frac{W_n}{T_{G,n}} \qquad (E1)$$

a suitable glass transition point TG for the polymer is produced; wherein

- n is the serial number of the monomers used;

- $W_n$ is the mass fraction of the respective monomer n (wt %); and

- $T_{G,n}$ is respective glass transition temperature of the homopolymer of the respective monomers n in Kelvin.

Up to a particular upper limiting molar mass, glass transition temperatures of homopolymers may be dependent on the molar mass of the homopolymer; the reference to glass transition temperatures of homopolymers in this specification is made in relation to those polymers whose molar masses lie above this limiting molar mass, in other words in the glass transition temperature-constant range. The glass transition temperature is determined after removal of the solvent, in the noncrosslinked state (in the absence of crosslinkers).

Analogously, the equation E1 may also be applied for determining and predicting the glass transition temperature of polymer mixtures. In that case, where the mixtures in question are homogeneous, n=serial number of the polymers used, $W_n$=mass fraction of the respective polymer n (wt %), and $T_{G,n}$=respective glass transition temperature of the polymer n in K.

**Initiator**

The first stage may be performed in the presence of at least one polymerization initiator, especially a radical polymerization initiator. Such initiator ensures an efficient initiation or start of the polymerization reaction and thus an efficient reaction course. This ensures an efficient polymerization procedure within the first stage.

Preferably, such polymerization initiator, especially radical polymerization initiator may be selected from the group consisting of thermal polymerization initiators, redox polymerization initiators and combinations thereof, particularly inorganic and/or organic persulfates, peroxides, hydroperoxides, perbenzoates, per- alkanoates, azoinitiators and combinations thereof, more preferably selected from the group consisting of inorganic and/or organic persulfates and azobis- isobutyronitrile (AIBN), particularly selected from the group consisting of inorganic persulfates of alkali or earth alkaline metals and azobisisobutyronitrile (AIBN), more particularly potassium persulfate (KPS) or azobisisobutyronitrile (AIBN).

As delineated before, apart from azoinitiators such as e.g. AIBN and inorganic persulfates such as e.g. KPS, stage (step) (a), i.e. polymerization, can also be performed in the presence of other polymerization initiators. The initiator system may, for example, be chosen among thermal initiators, redox initiators or combinations thereof, for example potassium or ammonium persulfates, tert-butyl hydroperoxide, cumene hydroperoxide, tert-butyl perbenzoate, tert-butyl 2-ethyl perhexanoate, hydrogen peroxide and benzoyl peroxide. Either oil- and/or water- soluble initiators may be used. Suitable reducing agents of a redox initiator system may include compounds, such as sulphur compounds with a low oxidation state, such as sulfites, hydrogen sulfites, alkali metal bisulfites, ketone adducts of bisulfites, such as acetone bisulfite, alkali metal disulfites, metabisulfites and its salts, thiosulfates, formaldehyde sulfoxylates and its salts, reducing nitrogen compounds, such as hydroxylamines, hydroxylamine hydrosulfate and hydroxylammonium salts, polyamines and reducing sugars, such as sorbose, fructose, glucose, lactose and derivatives thereof, enediols, such as ascorbic acid and isoascorbic acid, sulfinic acids, hydroxy alkyl sulfinic acids, such as hydroxy methyl sulfinic acid and 2-hydroxy-2-sulfinactic acid and its salts. Redox initiators are typically used in combination with trace amounts of metal such as iron, for example supplied as ferrous sulfate. Usually, the first stage (step) (a) is performed in the presence of at least one surfactant (synonymously also called emulsifier). This embodiment also ensures an efficient polymerization procedure. As appropriate surfactants, there may particularly be used anionic surfactants, such as e.g. alkyl, alkyl phenyl or styrenated phenyl sulfates and sulfonates, or polymerizable anionic surfactants containing sulfates and sulfonates together with allyl, propenyl and propenyl phenyl polymerizable groups, or polymerizable nonionic surfactants with hydrophilic part containing ethylene oxide or propylene oxide groups or mixtures of both together with polymerizable groups like allyl, propenyl and propenyl phenyl.

However, according to another (i.e. alternative) embodiment, the first stage (step) (a) may also be performed in the absence of any surfactant (i.e. in the absence of any emulsifier).

Furthermore, it may be advantageous when the first stage (step) (a) is performed in the presence of at least one buffer, especially an inorganic carbonate buffer, a hydrogen carbonate buffer or a ammonium hydroxide buffer. This embodiment ensures a stable and constant reaction environment and thus an efficient reaction course.

Particularly, the first stage (step) (a) may be performed under neutral or acidic conditions, preferably under acidic conditions.

As delineated before, apart from azoinitiators such as e.g. AIBN and inorganic persulfates such as e.g. KPS, stage (step) (a), i.e. polymerization, can also be performed in the presence of other polymerization initiators. The initiator system may, for example, be chosen among thermal initiators, redox initiators or combinations thereof, for example potassium or ammonium persulfates, tert-butyl hydroperoxide, cumene hydroperoxide, tert-butyl perbenzoate, tert-butyl 2-ethyl perhexanoate, hydrogen peroxide and benzoyl peroxide. Either oil- and/or water- soluble initiators may be used. Suitable reducing agents of a redox initiator system may include compounds, such as sulphur compounds with a low oxidation state, such as sulfites, hydrogen sulfites, alkali metal bisulfites, ketone adducts of bisulfites, such as acetone bisulfite, alkali metal disulfites, metabisulfites and its salts, thiosulfates, formaldehyde sulfoxylates and its salts, reducing nitrogen compounds, such as hydroxylamines, hydroxylamine hydrosulfate and hydroxylammonium salts, polyamines and reducing sugars, such as sorbose, fructose, glucose, lactose and derivatives thereof, enediols, such as ascorbic acid and isoascorbic acid, sulfinic acids, hydroxy alkyl sulfinic acids, such as hydroxy methyl sulfinic acid and 2-hydroxy-2-sulfinactic acid and its salts. Redox initiators are typically used in combination with trace amounts of metal such as iron, for example supplied as ferrous sulfate.

**Surfactant**

Usually, the first stage (step) (a) is performed in the presence of at least one surfactant (synonymously also called emulsifier). This embodiment also ensures an efficient polymerization procedure.

Especially, such surfactant or emulsifier may be an anionic or non-ionic surfactant, especially selected from the group consisting of anionic organic sulfates and sulfonates and non-ionic alkylene oxides, especially ethylene and/or propylene oxides, and combinations thereof, preferably selected from the group consisting of organic sulfonates, particularly dodecyl diphenyloxide disulfonates.

As appropriate surfactants, there may particularly be used anionic surfactants, such as e.g. alkyl, alkyl phenyl or styrenated phenyl sulfates and sulfonates, or polymerizable anionic surfactants containing sulfates and sulfonates together with allyl, propenyl and propenyl phenyl polymerizable groups, or polymerizable nonionic surfactants with hydrophilic part containing ethylene oxide or propylene oxide groups or mixtures of both together with polymerizable groups like allyl, propenyl and propenyl phenyl.

However, according to another (i.e., alternative) embodiment, the first stage (step) (a) may also be performed in the absence of any surfactant (i.e., in the absence of any emulsifier).

**Chain transfer agent**

In the polymerization, chain transfer agents can be used in amounts of at least 0.01 part by weight of chain transfer agent per 100 parts by weight of monomers, e.g., from 0.01 to 0.8 part by weight, or from 0.01 to 0.1 part by weight, per 100 parts by weight of the monomers to be polymerized. Using these agents, through a chain termination reaction, the molar mass of the emulsion polymer can be controlled or reduced. These agents are bonded to the polymer in the process, generally to the chain end.

Suitable chain transfer agents are, for example, organic compounds containing sulfur in bonded form (e.g., compounds with a thiol group), aliphatic and/or araliphatic halogen compounds, aliphatic and/or aromatic aldehydes, unsaturated fatty acids (e.g., oleic acid), dienes having nonconjugated double bonds (such as divinylmethane, terpinolene, or vinylcyclohexene, for example), hydrocarbons having readily abstractable hydrogen atoms (such as toluene, for example), organic acids and/or their salts (such as formic acid, sodium formate, ammonium formate, for example), alcohols (such as isopropanol, for example), and phosphorus compounds (such as sodium hypophosphite, for example). Also possible, however, is the use of mixtures of mutually nondisrupting chain transfer agents as stated above. The chain transfer agents are generally low molecular mass compounds with a molar weight of less than 2000, more particularly of less than 1000 g/mol. It is advantageous to supply a portion or the entirety of the chain transfer agents to the aqueous reaction medium before the radical polymerization is initiated. Furthermore, a portion or the entirety of the radical chain transfer compound may also be advantageously supplied to the aqueous reaction medium together with the monomers, during the polymerization.

Organic compounds having a thiol group are, for example, primary, secondary or tertiary aliphatic thiols, such as, for example, ethanethiol, n-propanethiol, 2-propanethiol, n-butanethiol, 2-butanethiol, 2-methyl-2-propanethiol, n-pentanethiol, 2-pentanethiol, 3-pentanethiol, 2-methyl-2-butanethiol, 3-methyl-2-butanethiol, n- hexanethiol, 2-hexanethiol, 3-hexanethiol, 2-methyl-2-pentanethiol, 3-methyl-2- pentanethiol, 4-methyl-2-pentanethiol, 2-methyl-3-pentanethiol, 3-methyl-3-pentanethiol, 2-ethylbutanethiol, 2-ethyl-2-butanethiol, n-heptanethiol and its isomeric compounds, n-octanethiol and its isomeric compounds, n-nonanethiol and its isomeric compounds, n-decanethiol and its isomeric compounds, n-undecanethiol and its isomeric compounds, n-dodecanethiol and its isomeric compounds, n-tridecanethiol and its isomeric compounds, substituted thiols, such as, for example, 2-hydroxy-ethanethiol, aromatic thiols, such as benzenethiol, ortho-, meta-, or para-methyl-benzenethiol, mercaptoalkyl esters of, for example, C2 to C4 carboxylic acids, having 1 to 18 C atoms in the alkyl group, as for example 2-mercaptoethyl propionate, and also all further sulfur compounds described in Polymer Handbook, 3rd edition, 1989, J. Brandrup and E. H. Immergut, John Wiley & Sons, Section II, pages 133 to 141. Preferred organic compounds comprising sulfur in bonded form are, in particular, tert.-butyl mercaptan, ethyl thioglycolate, mercaptoethanol, mercaptopropyltrimethoxysilane, tert-dodecyl mercaptan, thiodiglycol, ethylthioethanol, di-n-butyl sulfide, di-n-octyl sulfide, diphenyl sulfide, diisopropyl disulfide, 2-mercaptoethanol, 1,3-mercapto-propanol, 3-mercaptopropane-1,2-diol, 1,4-mercaptobutanol, thioglycolic acid, 3-mercaptopropionic acid, mercaptosuccinic acid, thioacetic acid, and thiourea. Particularly preferred thio compounds are tert-butyl mercaptan, ethyl thioglycolate, mercaptoethanol, mercaptopropyltrimethoxysilane or tert-dodecyl mercaptan.

Aliphatic and/or araliphatic halogen compounds are, for example, n-butyl chloride, n-butyl bromide, n-butyl iodide, methylene chloride, ethylene dichloride, chloroform, bromoform, bromotrichloromethane, dibromodichloromethane, carbon tetrachloride, carbon tetrabromide, benzyl chloride, benzyl bromide. Aliphatic and/or aromatic aldehydes are, for example, formaldehyde, acetaldehyde, propionaldehyde and/or benzaldehyde.

**Particle size**

The copolymer of the aqueous polymer dispersion may have a size distribution of dispersion particles which is monomodal, bimodal, or multimodal. The number average size indicates the d50 of the particle size distribution, meaning that 50 wt.% of the total mass of all particles have a particle diameter smaller than the d50. The particle size distribution can be determined in a known way using an analytical ultracentrifuge (W. Machtle, Makromolekulare Chemie 185 (1984), pp. 1025-1039). The number average particle size of the aqueous polymer dispersion may be 2000 nm or less, 1900 nm or less, 1800 nm or less, 1700 nm or less, 1600 nm or less, 1500 nm or less, 1400 nm or less, 1300 nm or less, 1200 nm or less, 1100 nm or less, 1000 nm or less, 900 nm or less, 800 nm or less, 700 nm or less, 600 nm or less, 500 nm or less, 400 nm or less, 300 nm or less, 200 nm or less, 100 nm or less 50 nm or less, 25 nm or less, 10 nm or less, or 5 nm or less.

In an embodiment, the emulsion-polymerized particles have a number average size ranging from 50 to 500 nm, preferably ranging from 70 to 180 nm.

**Pressure-sensitive adhesives**

A pressure-sensitive adhesive (PSA) compound is, in accordance with professional understanding, an adhesive compound that has pressure-sensitive adhesive properties, i.e. the property of forming a permanent bond to an adhesive base even under relatively weak pressure. Such adhesives or pressure-sensitive adhesive tapes are usually permanently tacky even at room temperature, which means that they have a certain viscosity and tack so that they wet the surface of a substrate even at low pressure. Without wishing to be bound by this theory, it is often assumed that a pressure-sensitive adhesive can be regarded as an extremely highly viscous liquid with an elastic component, which therefore has characteristic viscoelastic properties that lead to the permanent inherent tack and pressure-sensitive adhesive properties described above. It is assumed that viscous flow processes as well as the build-up of elastic restoring forces occur in pressure-sensitive adhesives during mechanical deformation. The proportionate viscous flow serves to achieve adhesion, while the proportionate elastic restoring forces are necessary in particular to achieve cohesion. The relationships between rheology and tack are known in the prior art and are described, for example, in "Satas, Handbook of Pressure Sensitive Adhesives Technology", Third Edition, (1999), pages 153 to 203. To characterize the degree of elastic and viscous content, the storage modulus (G') and the loss modulus (G") are usually used, which can be determined by means of dynamic mechanical analysis (DMA), for example using a rheometer. In the context of the present invention, an adhesive composition is preferably understood to be tacky and thus a pressure-sensitive adhesive composition if, at a temperature of 23 °C in the deformation frequency range from $10^\circ$ to $10^1$ rad/sec, G' and G" are each at least partially in the range from $10^3$ to $10^7$ Pa.

According to one aspect of the invention, the present invention refers to a pressure-sensitive adhesive comprising one or more multiphase polymer particles.

"Based on" in the present disclosure means that the properties of the pressure-sensitive adhesive composition are at least strongly determined by the basic properties of the one or more multiphase polymer particles, although it is of course not excluded that these properties are additionally influenced by the use of modifying auxiliaries or additives in a composition. In particular, this may mean that the proportion of the one or more multiphase polymer particles in the total mass of the pressure-sensitive adhesive composition is more than 50% by weight.

In one embodiment, the pressure-sensitive adhesive composition according to the invention comprises at least one or more multiphase polymer particles in an overall amount of at least 50% by weight, preferably at least 60% by weight, particularly preferably 70% by weight based on the total weight of the pressure-sensitive adhesive composition.

The invention further relates to adhesive tapes and adhesive films comprising at least one layer of a pressure-sensitive adhesive of the invention. Suitable adhesive tapes include single-sided adhesive tapes, where the layer of the PSA of the invention is provided in particular on one side of a carrier layer (with direct contact or indirectly), and also double-sided adhesive tapes, in which case there is a layer of a PSA provided on both sides of a carrier layer, in each case in direct contact or indirectly. At least one of the layers of adhesive of a double-sided adhesive tape of the invention is in that case a PSA of the invention, and it is also possible for both layers of adhesive of the double-sided adhesive tape of the invention to be adhesives of the invention, which in turn may again be identical or different, in terms of their thickness or specific chemical composition, for instance. Single- or double-sided adhesive tapes may have further layers, as is known in principle from the prior art.

The invention also embraces a carrier-less adhesive tape, consisting only of a layer of the PSA according to the invention.

The adhesive tapes may optionally exhibit temporarily applied liner materials on their respective PSA layers which are removed prior to the application of the tape. The invention further relates to the use of a pressure-sensitive adhesive according to the invention for adhering substrates having a bended or curved shape.

Generally, the adhesive products of the invention find a multiplicity of applications, as for example in the construction industry, in the electronics industry, in the home and hobby sector, in the auto industry, in ship, boat, and railroad construction, for household appliances, furniture, and the like. Examples of advantageous applications are the bonding of trim strips and badges in the aforesaid sectors, the bonding of stiffening profiles in elevators, the bonding of components and products in the solar industry, frame bonding in electronic consumer goods, such as televisions and the like, and bonds associated with signage production.

The adhesives of the invention and the adhesive tapes of the invention are outstandingly suitable for bonding flexible printing plates to curved surfaces. In the flexographic printing process, flexible printing plates are bonded to printing cylinders or printing sleeves. Such plates consist, for example, of a polyethylene terephthalate film (PET film) on which a layer of a photopolymer is applied, into which the appropriate print relief can be introduced by exposure to light. The bonding of the plates on the printing cylinder or printing sleeve then takes place by way of the PET film.

The pressure-sensitive adhesive tapes of the invention outstandingly meet the very exacting requirements in this area. For the printing operation, the pressure-sensitive adhesive tape is required to have a certain hardness, but also a certain elasticity. Moreover, the peel adhesion should be sufficient to ensure that the printing plate does not detach from the double-sided pressure sensitive adhesive tape, or the pressure sensitive adhesive tape from the cylinder or the sleeve. This is to be the case, for example, even at elevated temperatures of 40 to 60 °C and at relatively high printing speeds. In addition to this property, however, the PSA is also to possess reversible adhesion properties, in order to allow the printing plates to be detached again after the printing operations (where not only the adhesive bond of the pressure-sensitive adhesive tape to the print cylinder or print sleeve but also the bond to the plate must be amenable to residue-free parting, in order to ensure that both components can be reused). This detachability ought also to be the case after bonding over a relatively long time period (up to six months). It is desirable, moreover, that the pressure sensitive adhesive tape and in particular the printing plate can be removed again without destruction thereof, i.e., without substantial application of force, since in general the printing plates are used more than once. Moreover, there should be no residues left on the printing plate or on the cylinder or sleeve. In summary, therefore, very exacting requirements are imposed on the double-sided pressure sensitive adhesive tapes suitable for this utility, and these requirements are fulfilled outstandingly by the PSA of the invention.

The adhesive can be used advantageously for bonding components of precision-mechanical, optical, electrical and/or electronic devices, such as during production, repair, decoration or the like of said devices, for example. Here is it possible for example for materials such as plastics, glasses, metals, and the like to be bonded.

In particular, the adhesive is also suitable for the permanent adhesive bonding of flexible materials, in particular in the production of flexible displays. Such displays are becoming increasingly important.

Advantageously, the adhesive can be used for the adhesive bonding of windows or lenses in casings of precision-mechanical, optical and/or electronic devices (so-called "lens mounting"). At least one of the rigid or flexible substrates here is transparent or translucent. The transparent or translucent substrate can be, for example, a window or an optical lens for the purpose of protecting sensitive components arranged therebeneath - such components can be, for example, liquid- crystal displays (LCD), light-emitting diodes (LED) or organic light-emitting diodes (OLED) of displays, but also printed circuits or other sensitive electronic components; this is very important, for example, in the case of use for touch-sensitive displays - and/or for bringing about optical effects for the functioning of the device - for example light refraction, light focusing, light attenuation, light amplification, etc.

**Experimental Section**

Measurement and test methods:

Method 1 - Determination of the glass transition temperature of polymers

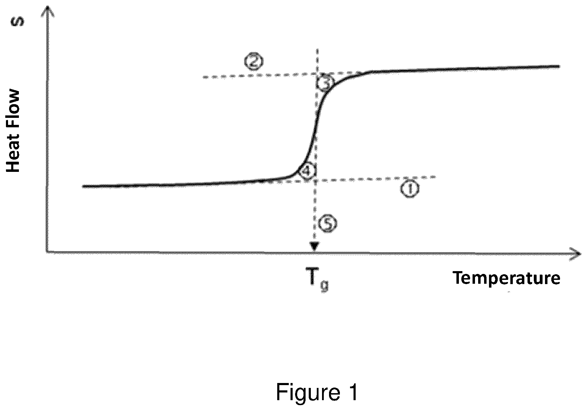

The static glass transition temperature of the polymers was determined using dynamic scanning calorimetry (DSC). For this purpose, 5 mg of an untreated sample of the polymer in question was weighed into an aluminum crucible (volume 25 $\mu$l) and sealed with a perforated lid. A DSC 204 F1 from Netzsch was used for the measurement. Work was carried out under nitrogen for the purpose of inertization. The sample was first cooled down to -150 °C, then heated up to +150 °C at a heating rate of 10 K/min and cooled down again to -150 °C. The second heating curve followed. The subsequent second heating curve was again run at 10 K/min and the change in heat capacity was recorded. Glass transitions are recognized as steps in the thermogram (heat flow-temperature diagram, see Figure 1).

The glass transition temperature $T_g$ is obtained as follows (see Figure 1):
The respective linear area of the measurement curve before and after the step is extended in the direction of rising (area before the step) or falling (area after the step) temperatures (extension lines ① and ②). In the area of the step, a regression line ⑤ parallel is positioned in relation to the ordinate so that it intersects the two extension lines in such a way that two areas ③ and ④ (between the respective extension line, the regression line and the measurement curve) of the same content are created. The intersection of the regression line positioned in this way with the measurement curve gives the glass transition temperature.

Method 2 - Dynamic mechanical analysis (DMA)

G' and G" are determined using a rheometer. The material to be analyzed is subjected to sinusoidal oscillating shear stress in a plate-plate arrangement. In shear stress-controlled devices, the deformation is measured as a function of time and the time offset of this deformation with respect to the application of the shear stress. This time offset is referred to as the phase angle $\delta$.

The storage modulus G' is defined as follows: G' = $(\tau/\gamma)$ -cos$(\delta)$ ($\tau$ = shear stress, $\gamma$ = deformation, $\delta$ = phase angle = phase shift between shear stress and deformation vector). The definition of the loss modulus G" is: G" = $(\tau/\gamma)$ -sin$(\delta)$ ($\tau$ = shear stress, $\gamma$ = deformation, $\delta$ = phase angle = phase shift between shear stress and deformation vector).

$$\tan \delta = G''/G';$$

Device: MCR 302e rheometer (Anton Paar), plate-plate, ø 12 mm;
Deformation: dynamic adjustment;
Measuring frequency: 1 Hz;
Measuring method: Frequency sweep;
Measuring range: $10^{-5}$ - $10^2$ Hz.

Method 3 - Peel adhesion on steel

The peel adhesion was determined at a test climate of 23 °C +/- 1 °C temperature and 50 % +/- 5 % relative humidity. The samples were cut to a width of 20 mm and bonded to a steel plate (ASTM). The steel plate was cleaned and conditioned before bonding. The plate was first wiped with solvent and then left in the air for 5 minutes to allow the solvent to evaporate. The side of the adhesive tape facing away from the test substrate was then covered with 25 $\mu$m thick, etched PET film, which prevented the sample from stretching during the measurement. The test sample was then rolled onto the substrate. For this purpose, the tape was rolled back and forth five times with a 4 kg roll at a rolling speed of 10 m/min. 1 min after rolling, the panel was pushed into a special holder. The peel adhesion was measured using a Zwick tensile testing machine; the samples were pulled off at an angle of 180° at a speed of 300 mm/min. The measurement results are given in N/cm and are averaged from three individual measurements. A peel adhesion of at least 5 N/cm is considered a good result.

Method 4 - Shear Resistance Time

A strip of the adhesive tape 13 mm wide and more than 20 mm long (30 mm, for example) was applied to a smooth steel surface which had been cleaned three times with acetone and once with isopropanol. The bond area was 20 mm.13 mm (length-width), the adhesive tape protruding beyond the test plate at the edge (by 10 mm, for example, corresponding to aforementioned length of 30 mm). Subsequently the adhesive tape was pressed onto the steel support four times, with an applied pressure corresponding to a weight of 2 kg. This sample was suspended vertically, with the protruding end of the adhesive tape pointing downwards.

At room temperature, a weight of 1 kg was affixed to the protruding end of the adhesive tape. The measurement is conducted under standard conditions (23° C., 55% humidity) and at 70° C. in a thermal cabinet.

The shear resistance times measured (times taken for the adhesive tape to detach completely from the substrate; measurement terminated at 10.000 min) are reported in minutes and correspond to the average value from three measurements.

A sheer resistance time of at least 10.000 (ten thousands) minutes is considered a good result.

Preparation of multiphase particles

The latexes were synthesized through a two-stage seeded semicontinuous emulsion polymerization, utilizing Dowfax 2A1 as a surfactant and potassium persulfate (KPS) as a thermal initiator. The final solid content, i.e., the content of polymer, was maintained at approximately 50 wt.-% and particle size was maintained between 100 nm to 400 nm. Polymerizations were conducted in glass reactors equipped with a reflux condenser, sampling tube, nitrogen inlet, feeding inlet, thermocouple, and a stainless-steel anchor stirrer at 170 rpm. The reactor temperature was controlled using an automatic control system. The procedure was carried out in multiple stages as described in the following for the example of a multiphase particle via four-polymerization stages:

• First Stage - "Core Formation"

A soft seed with a 20-wt% solids content was synthesized by batch emulsion polymerization of a monomer mixture, wherein the monomers selected of methyl methacrylate (MMA), butyl acrylate (BA), butyl methacrylate (BMA), styrene (S), and acrylic acid (AA).

An initial charge of water and surfactant was heated to 85°C under stirring. The reactor was purged with nitrogen, and the monomer mixture and initiator solution (KPS, 5 wt%) were added in a single shot. The reaction was maintained for 30 minutes to allow complete polymerization.

This step produced a soft-core polymer with a glass transition temperature (Tg) of -30°C to -40°C.

• Second stage

The hard internal domains, comprising 5-10% of the final particle volume, were created by semi continuously feeding a pre-emulsion of additional monomers (a mixture of MMA, BA, BMA, S, and AA) over a period of 0-30 minutes. This mixture yielded a polymer with a Tg ranging from 40°C to 100°C.

The inclusion of styrene facilitated the identification of hard domains via electron microscopy.

• Third stage

After the hard inclusions were formed, the third stage involved completing the soft core. A pre-emulsion of additional monomers was fed continuously over a period of 1-2 hours, forming a soft shell around the hard domains. The resultant polymer had a Tg of -30°C to -40°C.

During this stage, a second portion of the KPS initiator solution was fed in parallel to ensure full conversion of the monomers.

• Fourth stage

Finally, the outer hard "shell" was created by feeding a mixture of monomers selected from MMA, BA, BMA, S, AA, and 4-Acryloylmorpholine, over 0-30 minutes. This stage improved the mechanical properties of the latex particles.

The reaction temperature was kept for an additional hour to ensure high monomer conversion, after which the pH was adjusted to 8.0-8.5 using a 25 wt% ammonia solution ($NH_3$).

### Synthesis of Example

### Comparison Example 1

Recipe for the synthesis of 100g Latex and solid content 50% for comparison example 1:

|  |  | 1st stage | 2nd stage |
|---|---|---|---|
| initial charge | Water | 35,15 | |
| | Surfactant (Dowfax 2A1) | 0,29 | |
| initiator solution | Water | 2,20 | 0,00 |
| | KPS | 0,14 | 0,00 |
| Pre-emulsion Solution | Water | 6,59 | 5,37 |
| | AA | 0,22 | 0,87 |
| | MMA | 6,32 | |
| | S | 0,00 | 0,00 |
| | BA | 4,36 | 38,33 |
| | Surfactant (Dowfax 2A1) | 0,02 | |
| | Total | 55,3 | 44,6 |

The initial charge was heated to 85° C. Then, start by polymerizing 1st stage by feeding pre-emulsion in 2 minutes, shot the initiator solution and let to be polymerized for 30 minutes. Thereafter, start polymerizing the 2nd stage by feeding the pre-emulsion solution over 90 min and polymerized subsequently for 60 min. After the batch had been cooled to room temperature, it was adjusted with Ammonia solution (25%) to a pH of 7-8.

This example illustrates the preparation steps and monomer compositions, which resulted in multiphase polymer particles in a two-stage polymerization.

The glass transition temperatures of the copolymers, polymerized in each stage were calculated based on the applied monomer mixtures to be 20 °C for stage 1 and -42 °C for stage 2.

**Example 1 (E1)**

Recipe for the synthesis of 100g Latex and solid content 50% for example 1:

|  |  | 1st stage | 2nd stage | 3rd stage |
|---|---|---|---|---|
| initial charge | Water | 25,16 | | |
| | Surfactant (Dowfax 2A1) | 0,28 | | |
| initiator solution | Water | 1,57 | 10,37 | |
| | KPS | 0,13 | 0,13 | |
| Pre-emulsion Solution | Water | 4,72 | 0,00 | 10,37 |
| | AA | 0,16 | 0,21 | 0,59 |
| | MMA | 0,00 | | 0,18 |
| | S | 0,78 | 5,09 | 3,38 |
| | BA | 6,86 | 0,00 | 29,73 |
| | Surfactant (Dowfax 2A1) | 0,02 | | 0,00 |
| | Total | 39,7 | 15,8 | 44,2 |

The initial charge was heated to 85° C. Then, start by polymerizing 1st stage by feeding pre-emulsion in 2 minutes, shot the initiator solution and let to be polymerized for 30 minutes. Thereafter, start polymerizing the 2nd stage by feeding the pre-emulsion solution over 30 min and the initiator solution over 120 minutes. Thereafter, start polymerizing the 3rd stage by feeding the pre-emulsion solution over 90 min and polymerized Subsequently for 60 min. After the batch had been cooled to room temperature, it was adjusted with Ammonia solution (25%) to a pH of 7-8.

This example illustrates the preparation steps and monomer compositions, which resulted in multiphase polymer particles in a three-stage polymerization.

The glass transition temperatures of the copolymers, polymerized in each stage were calculated based on the applied monomer mixtures to be -42 °C for stage 1, 105 °C for stage 2 and -42 °C for stage 3.

**Example 2**

Recipe for the synthesis of 100g Latex and solid content 50% for example 2:

|  |  | 1st stage | 2nd stage | 3rd stage |
|---|---|---|---|---|
| initial charge | Water | 31,95 | | |
| | Surfactant (Dowfax 2A1) | 0,27 | | |
| initiator solution | Water | 2,00 | 4,96 | |
| | KPS | 0,19 | 0,19 | |
| Pre-emulsion Solution | Water | 5,99 | 0,00 | 4,96 |
| | AA | 0,20 | 0,07 | 0,72 |
| | AMA | 0,03 | | 0,00 |
| | S | 1,19 | 2,94 | 3,60 |
| | BA | 8,46 | 0,45 | 31,72 |
| | Surfactant (Dowfax 2A1) | 0,02 | | 0,22 |
| | Total | 50,3 | 8,6 | 41,2 |

The initial charge was heated to 85° C. Then, start by polymerizing 1st stage by feeding pre-emulsion in 2 minutes, shot the initiator solution and let to be polymerized for 30 minutes. Thereafter, start polymerizing the 2nd stage by feeding the pre-emulsion solution over 30 min and the initiator solution over 120 minutes. Thereafter, start polymerizing the 3rd stage by feeding the pre-emulsion solution over 90 min and polymerized Subsequently for 60 min. After the batch had been cooled to room temperature, it was adjusted with Ammonia solution (25%) to a pH of 7-8.

This example illustrates the preparation steps and monomer compositions, which resulted in multiphase polymer particles in a three-step polymerization.

The glass transition temperatures of the copolymers, polymerized in each stage were calculated based on the applied monomer mixtures to be -39 °C for stage 1, 60 °C for stage 2 and -42 °C for stage 3.

### Example 3

Recipe for the synthesis of 100g Latex and solid content 50% for example 3:

| | | 1st stage | 2nd stage | 3rd stage | 4th stage |
|---|---|---|---|---|---|
| initial charge | Water | 30,84 | | | |
| | Surfactant (Dowfax 2A1) | 0,26 | | | |
| initiator solution | Water | 1,93 | | 4,68 | |
| | KPS | 0,02 | | 0,22 | |
| preemulsion feed | Water | 5,78 | 0,02 | 4,68 | |
| | AA | 0,29 | 0,10 | 1,05 | 0,11 |
| | MMA | 0,86 | | 2,27 | 3,13 |
| | S | 0,29 | 2,49 | 0,87 | |
| | BA | 8,12 | 0,75 | 30,70 | 0,36 |
| | Surfactant (Dowfax 2A1) | 0,02 | | 0,21 | |
| | Total | 48,4 | 8,3 | 39,8 | 3,6 |

The initial charge was heated to 85° C. Then, start by polymerizing 1st stage by feeding pre-emulsion in 2 minutes, shot the initiator solution and let to be polymerized for 30 minutes. Thereafter, start polymerizing the 2nd stage by feeding the pre-emulsion solution over 30 min and the initiator solution over 120 minutes. Thereafter, start polymerizing the 3rd stage by feeding the pre-emulsion solution over 90 min and polymerized subsequently for 60 min. Then, start polymerizing the 4th stage by feeding the pre-emulsion solution over 30 min and polymerized Subsequently for 60 min. After the batch had been cooled to room temperature, it was adjusted with Ammonia solution (25%) to a pH of 7-8.

This example illustrates the preparation steps and monomer compositions, which resulted in multiphase polymer particles in a four-stage polymerization.

The glass transition temperatures of the copolymers, polymerized in each stage were calculated based on the applied monomer mixtures to be -39 °C for stage 1, 44 °C for stage 2, -42 °C for stage 3 and 75 °C for stage 4.

### Example 4

Recipe for the synthesis of 100g Latex and solid content 52% for example 4:

| | | 1st stage | 2nd stage | 3rd stage | 4th stage |
|---|---|---|---|---|---|
| initial charge | Water | 31,28 | | | |
| | Surfactant (Dowfax 2A1) | 0,26 | | | |
| initiator solution | Water | 1,96 | | 3,21 | |
| | KPS | 0,06 | | 0,18 | |
| Pre-emulsion Solution | Water | 5,87 | 1,57 | 3,21 | |
| | AA | 0,29 | 0,10 | 1,06 | 0,12 |
| | MMA | 0,87 | | 2,30 | 3,42 |
| | S | 0,29 | 2,53 | 0,88 | |
| | BA | 8,24 | 0,76 | 31,13 | 0,39 |
| | Surfactant (Dowfax 2A1) | 0,02 | | 0,22 | |
| | Total | 49,1 | 8,4 | 38,8 | 3,9 |

The initial charge was heated to 85° C. Then, start by polymerizing 1st stage by feeding pre-emulsion in 2 minutes, shot the initiator solution and let to be polymerized for 30 minutes. Thereafter, start polymerizing the 2nd stage by feeding the pre-emulsion solution over 30 min and the initiator solution over 120 minutes. Thereafter, start polymerizing the 3rd stage by feeding the pre-emulsion solution over 90 min and polymerized Subsequently for 60 min. Then, start polymerizing the 4th stage by feeding the pre-emulsion solution over 30 min and polymerized Subsequently for 60 min. After the batch had been cooled to room temperature, it was adjusted with Ammonia solution (25%) to a pH of 7-8.

This example illustrates the preparation steps and monomer compositions, which resulted in multiphase polymer particles in a four-stage polymerization.

The glass transition temperatures of the copolymers, polymerized in each stage were calculated based on the applied monomer mixtures to be -39 °C for stage 1, 44 °C for stage 2, -42 °C for stage 3 and 75 °C for stage 4.

**Adhesive Films**

After the sequential polymerization of the multiphase particles, the resulting aqueous dispersion undergoes a controlled drying process to extract the water content. The drying process is carried out in a convection oven set to a temperature range of 60°C to 80°C, ensuring gradual evaporation of water to prevent agglomeration of the adhesive particles. The dispersion is spread in a thin, uniform layer on a non-stick surface, such as a Teflon-coated tray, to facilitate even drying. The drying period typically lasts between 12 to 24 hours, depending on the initial water content and the desired final consistency of the adhesive film.

Once the drying process is complete, the adhesive film is carefully peeled off the non-stick surface and conditioned at room temperature for 24 hours. The performance as a pressure sensitive adhesive (PSA) is then evaluated using standardized tests, such as peel adhesion, tack, and shear resistance. These tests are conducted to ensure that the adhesive properties meet the required specifications for their intended applications.

Table 1: Experimental results

|  | Peel adhesion / N/cm | Shear resistance time / min | Fracture pattern |
|---|---|---|---|
| Comparison Example 1 | 3,1 | > 10.000 | Adhesive |
| Example 1 | 17,6 | 42 | Anchorage Failure |
| Example 2 | 6,1 | > 10.000 | Cohesive |
| Example 3 | 6,6 | > 10.000 | Cohesive |
| Example 4 | 7,1 | > 10.000 | Cohesive |

The inventive particles show tunability of the adhesive performance and especially show balanced and good properties in cohesion and adhesion.

For examples 2, 3 and 4, shear resistance times over 30.000 minutes were determined.

**Claims**

1. An emulsion-polymerized polymer particle for use as pressure-sensitive adhesive, comprising at least three (co)polymers,

   **characterized in that**

   - each of the at least three (co)polymers has either a glass transition temperature in the range from -60 °C to -30°C or in the range from 35 °C to 110 °C;
   - at least one of the at least three (co)polymers has a glass transition temperature in the range from -60 °C to -30 °C; and
   - at least one of the at least three (co)polymers has a glass transition temperature in the range from 35 °C to 110 °C.

2. The emulsion-polymerized polymer particle according to one of the aforementioned claims, wherein the at least three (co)polymers each individually derived from a monomer composition consisting of at least 80 wt.-% of monomers selected from the group consisting of (meth)acrylates, (meth)acrylamides, and monomers comprising at least one polymerizable vinyl group.

3. The emulsion-polymerized polymer particle according to one of the aforementioned claims comprising or consisting of (co)polymers derived from

   a) 50 - 95 wt.-% (meth)acrylates;
   b) 0.1 - 5 wt.-% (meth)acrylic acids;
   c) 0 - 5 wt.-% (meth)acryl amides;
   d) 0 - 20 wt.-% of vinyl monomers, preferably styrenic monomers;
   e) 0 - 20 wt.-% of monomers comprising at least one polymerizable vinyl group, which are different from a) to d).

4. The emulsion-polymerized polymer particle according to one of the aforementioned claims, wherein at least two of the (co)polymers have a glass transition temperature in the range from -60 °C to -30 °C.

5. The emulsion-polymerized polymer particle according to one of the aforementioned claims, wherein at least two of the (co)polymers have a glass transition temperature in the range from 35 °C to 110 °C.

6. The emulsion-polymerized polymer particle according to one of the aforementioned claims, wherein at least one of the (co)polymers has a glass transition temperature of more than 65 °C, preferably in the range from 65 °C and 110 °C.

7. The emulsion-polymerized polymer particle according to one of the aforementioned claims, wherein at least one of the (co)polymers has a glass transition temperature of more than 35 °C and below 65 °C.

8. The emulsion-polymerized polymer particle according to one of the aforementioned claims, wherein the emulsion-polymerized particle is a multi-phase polymer particle.

9. The emulsion-polymerized polymer particle according to one of the aforementioned claims, wherein the ratio by weight-% of (co)polymers with a glass transition temperature in the range from 35 °C to 110 °C to (co)polymers with a glass transition temperature in the range from -60 °C to -30 °C is equal or smaller than 25%, preferably equal or smaller than 20%.

10. The emulsion-polymerized polymer particle produced by a sequential polymerization.

11. The emulsion-polymerized polymer particle according to claim 10, wherein the sequential polymerization comprises at least three polymerization stages for polymerizing a (co)polymer with a glass transition temperature in the range a) from -60 °C to -30°C or in range b) from 35 °C to 110 °C; wherein starting from the second stage, the glass transition temperature of the (co)polymer, polymerized in each stage differs in the glass transition temperature range from the (co)polymer, polymerized in the previous stage.

12. The emulsion-polymerized polymer particle according to one of the aforementioned claims comprising a seed with a glass transition temperature in the range from -60 °C to -30 °C.

13. A pressure-sensitive adhesive based one or more emulsion-polymerized polymer particles according to one of the aforementioned claims.

14. A method of preparing an emulsion-polymerized polymer particle according to one of the claims 1 to 12 or a pressure-sensitive adhesive according to claim 13 comprising the steps

a) Dispersing 10 to 30 wt.-% of a first monomer mixture, a surfactant, and an initiator in an aqueous medium;
b) polymerizing the first monomer mixture;
c) Dispersing 3 to 10 wt.-% of a second monomer mixture, wherein the glass transition temperature of the second monomer mixture differs in at least 65°C compared to the glass transition temperature of the first monomer mixture;
d) polymerizing the second monomer mixture;
e) Dispersing 50 to 80 wt.-% a third monomer mixture, wherein the glass transition temperature of the third monomer mixture differs in at least 65°C compared to the second monomer mixture;
f) polymerizing the third monomer mixture; optionally
g) dispersing 3 to 15 wt.-% of a fourth monomer mixture, wherein the glass transition temperature of the fourth monomer mixture differs in at least 65°C compared to the third monomer mixture; and optionally polymerizing the fourth monomer mixture.

15. The method according to claim 14, wherein the first, second, third, and optionally fourth monomer mixture comprise independently from each other one or more monomers selected from the group consisting of (meth)acrylic acid esters, (meth)acrylamides and monomers having at least one polymerizable vinyl group.

Figure 1

Europäisches
Patentamt

European
Patent Office

Office européen
des brevets

## EUROPEAN SEARCH REPORT

**Application Number**

EP 24 22 0441

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/119484 A1 (GUO HAILAN [US]) 25 April 2019 (2019-04-25) * paragraphs [0001], [0005] - [0007]; examples E2, E3; tables 1-3 * | 1,2,5,6, 8,10-12 | INV. C08F2/22 C08F265/06 C08F285/00 C09J7/38 C09J151/00 |
| X | GB 2 039 496 A (DU PONT) 13 August 1980 (1980-08-13) * page 1, line 47 - page 2, line 91; examples 1, 10 * | 1,2, 4-12,14, 15 | |
| X | US 2019/233549 A1 (LEE KWANG JIN [KR] ET AL) 1 August 2019 (2019-08-01) * paragraph [0002]; example 1; table 1 * | 1-3,5,6, 8,10,11 | |
| X | US 2014/205825 A1 (GUO HAILAN [US] ET AL) 24 July 2014 (2014-07-24) * paragraph [0001]; examples 1,2,4 * | 1,2,5,6, 8,10-12 | |
| X | US 2019/292412 A1 (YAMASAKI SUMIAKI [JP] ET AL) 26 September 2019 (2019-09-26) * paragraphs [0002], [0025] - [0037], [0172] - [0253], [0267] - [0348] * * figures 2,3 * * examples A2, A5; table 1 * * examples 5,9; table 2 * | 1,2,5,7, 8,10,13 | TECHNICAL FIELDS SEARCHED (IPC) C08J C08F C09J |
| A,D | EP 3 277 739 B1 (ROHM & HAAS [US]) 23 October 2019 (2019-10-23) * paragraphs [0002], [0009] - [0032]; examples 1,2,5-7 * | 1-15 | |

The present search report has been drawn up for all claims

| Place of search | Date of completion of the search | Examiner |
|---|---|---|
| The Hague | 2 June 2025 | Dessemond, C |

EPO FORM 1503 03.82 (P04C01)

## ANNEX TO THE EUROPEAN SEARCH REPORT
## ON EUROPEAN PATENT APPLICATION NO.

EP 24 22 0441

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2025

| Patent document cited in search report | | Publication date | Patent family member(s) | | Publication date |
|---|---|---|---|---|---|
| US 2019119484 | A1 | 25-04-2019 | BR | 112018073891 A2 | 26-02-2019 |
| | | | CN | 109153742 A | 04-01-2019 |
| | | | EP | 3464389 A1 | 10-04-2019 |
| | | | JP | 7000350 B2 | 19-01-2022 |
| | | | JP | 2019516848 A | 20-06-2019 |
| | | | KR | 20190014510 A | 12-02-2019 |
| | | | US | 2019119484 A1 | 25-04-2019 |
| | | | WO | 2017205177 A1 | 30-11-2017 |
| GB 2039496 | A | 13-08-1980 | DE | 2918265 A1 | 24-07-1980 |
| | | | FR | 2446296 A1 | 08-08-1980 |
| | | | GB | 2039496 A | 13-08-1980 |
| | | | IT | 1202925 B | 15-02-1989 |
| | | | JP | S5594917 A | 18-07-1980 |
| | | | JP | S6241241 B2 | 02-09-1987 |
| | | | NL | 7907194 A | 15-07-1980 |
| US 2019233549 | A1 | 01-08-2019 | CN | 109963882 A | 02-07-2019 |
| | | | EP | 3502148 A1 | 26-06-2019 |
| | | | JP | 6916275 B2 | 11-08-2021 |
| | | | JP | 2019529650 A | 17-10-2019 |
| | | | KR | 20180137893 A | 28-12-2018 |
| | | | US | 2019233549 A1 | 01-08-2019 |
| | | | WO | 2018236024 A1 | 27-12-2018 |
| US 2014205825 | A1 | 24-07-2014 | AU | 2012299239 A1 | 21-11-2013 |
| | | | BR | 112013027682 A2 | 27-12-2016 |
| | | | CN | 103596991 A | 19-02-2014 |
| | | | EP | 2699610 A1 | 26-02-2014 |
| | | | JP | 2014524511 A | 22-09-2014 |
| | | | JP | 2017179375 A | 05-10-2017 |
| | | | KR | 20140053872 A | 08-05-2014 |
| | | | US | 2014205825 A1 | 24-07-2014 |
| | | | WO | 2013028403 A1 | 28-02-2013 |
| US 2019292412 | A1 | 26-09-2019 | JP | 7081253 B2 | 07-06-2022 |
| | | | JP | 2019167471 A | 03-10-2019 |
| | | | US | 2019292412 A1 | 26-09-2019 |
| EP 3277739 | B1 | 23-10-2019 | AR | 104059 A1 | 21-06-2017 |
| | | | BR | 112017021003 A2 | 03-07-2018 |
| | | | CN | 107438649 A | 05-12-2017 |
| | | | EP | 3277739 A1 | 07-02-2018 |
| | | | JP | 6886923 B2 | 16-06-2021 |
| | | | JP | 2018515640 A | 14-06-2018 |
| | | | RU | 2017136592 A | 18-04-2019 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 22 0441

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2025

| Patent document cited in search report | Publication date | Patent family member(s) | | Publication date |
|---|---|---|---|---|
| | | TW | 201634484 A | 01-10-2016 |
| | | US | 2018086867 A1 | 29-03-2018 |
| | | WO | 2016160250 A1 | 06-10-2016 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1420055 A
- US 2015132567 A1
- US 20090020225 A1
- EP 3277739 A1
- EP 1378527 B1
- EP 81083 A

**Non-patent literature cited in the description**

- **PETER A. LOVELL** ; **MOHAMED S. EI-AASSER**. Emulsion Polymerization and Emulsion Polymers. Wiley-VCH, 1997
- **J. BRANDRUP** ; **E. H. IMMERGUT**. Polymer Handbook. John Wiley & Sons, 1989, 133-141
- **W. MACHTLE**. *Makromolekulare Chemie*, 1984, vol. 185, 1025-1039
- **SATAS**. Handbook of Pressure Sensitive Adhesives Technology. 1999, 153-203